# EUROPEAN PATENT SPECIFICATION

(11) **EP 2 765 466 B1**
(45) Date of publication and mention of the grant of the patent: **04.09.2019**
(21) Application number: 14152397.7
(22) Date of filing: 24.01.2014
(51) Int. Cl.: G05B 19/042, G05B 19/418

(54) **A method for user management and a power plant control system thereof for a power plant system**
Verfahren zur Benutzerverwaltung und Kraftwerk-Steuerungssystem dazu für eine Kraftwerkanlage
Procédé de gestion d'utilisateur et système de commande de centrale électrique pour système de centrale électrique

(30) Priority: 12.02.2013 US 201313764872
(43) Date of publication of application: 13.08.2014
(73) Proprietor: Siemens Gamesa Renewable Energy A/S, 7330 Brande (DK)
(72) Inventor: Thejl, Henrik, 7600 Struer (DK); K S, Nagaraja, 560070 Bangalore (IN)
(74) Representative: Aspacher, Karl-Georg

(56) References cited:
- EP-A1- 2 037 651
- EP-A1- 2 549 351
- WO-A2-2008/086801
- GB-A- 2 487 049
- US-A1- 2012 232 961
- US-A1- 2012 297 461
- US-B2- 7 496 950

## Description

### FIELD OF THE INVENTION

The present application relates to the field of user management, and to a method for user management and a power plant control system for a power plant system.

### BACKGROUND OF THE INVENTION

Power Plant Control Systems (PPCS) may broadly relate to a wide variety of power plant control systems that are employed in power plant systems for monitoring and controlling the processes and operations associated. Power plant systems can either be centralised such as a thermal power plant, or can be networked and distributed such as wind power production plant comprising a large number of distributed wind parks. Typically, a modern day PPCS comprises a Supervisory Control And Data Acquisition (SCADA) system that monitors, controls and handles a huge amount of data, users, and a wide variety of control signals, such as user data, sensor data, network and communication data, process control signals, et cetera to ensure smooth, reliable and safe operation of the power plant. The PPCS may also be centralised or distributed depending on the type of power plant associated therewith. In a distributed PPCS, one or more components of the distributed PPCS, which are spread over different locations depending on the industrial system, may be communicatively connected using a wired/wireless communication network such as an Ethernet, Internet, WiMAX, et cetera.

The entities of the aforementioned PPCS may comprise Programmable Logic Controllers (PLCs), Intelligent Electronic Devices (IEDs), Communication Interfaces, Network Interfaces, Sensors, Data Servers, Processors, and the like, which may be interlinked and interconnected, in order to acquire data related to process variables and/or control variables from a plurality of entities of the power plants for measurement, control and modification of the one or more aforementioned variables for smooth, reliable and safe operation of the one or more aforementioned power plants.

Certain power plants, such as wind power plants comprising a network of wind mills that spread over huge areas, are vast power plants, because it spreads over large geographical areas. Such industrial systems and the PPCS can be complicated and cumbersome when multitude of local units (such as individual wind mills) and local entities (such as individual wind parks) of the wind power plant and the PPCS, which are not only spread over different geographical locations but also interconnected and networked, need to be managed for the smooth functioning of the wind power plant in its entirety. Primarily, in such a scenario, a group of local users manage a certain local entity or a local unit associated with the wind power plant. In certain scenarios, user groups may sometimes be located hundreds of kilometers away from one another. The communication between the user groups may have to be established over private networks (such as Intranet) or public networks (such as Internet), which are vulnerable to attacks.

Each local user of a user group may access, monitor and supervise the local units and local entities through a local Information Technology (IT) system associated therewith. To enable this, a fixed group log in account is normally created, such that the local user may log in using the group log in account to manage, supervise and control the day-to-day activities of the respective local unit and local entity of the wind power plant. Owing to the vast extent of the wind power plant, many such local groups of users need to exist for managing and controlling the respective local units and local entities, and this gives rise to a multitude of local IT systems. These local IT systems are normally networked and managed by a central IT system, which is the nerve-centre of the wind power plant. The PPCS, such as a wind power SCADA system, comprises the central IT system along with the multitude of local IT systems for supervising and controlling the individual units and entities of the power plant to ensure a reliable and smooth operation of the same.

Herein, it is to be noted that the local groups of users for managing local units and local entities are mainly for operating and managing the routine activities of the associated local unit and the local entity, and the local users may not have all the relevant competencies and qualifications to handle certain unforeseen technical snags, faults and repairs, which may hamper the operations of the local unit and the local entity. When such scenarios arise, a qualified technical engineer or a technical serviceman may need to either travel a long distance to reach the location or may have to log in from a remote location over a public network in order to access the local IT system to fix the technical snag. However, in case of the aforementioned wind power plants, wherein the entity confronted with the technical snag could potentially be located offshore, reaching the location physically becomes daunting. Also, it is not possible to have all the technically qualified personnel capable of fixing the technical snags present every time in all the locations owing to logistical reasons.

Furthermore, remote access of the local IT system by the technical engineer/serviceman over a public network becomes challenging: firstly, owing to the looming network security concerns - such as virus attacks, Trojans, malware, industrial hacking and espionages (such as the Stuxnet incident); secondly, the user authorization required to be provided by both the central IT system and the local IT system for accessing the local IT system, because the technical engineer/serviceman is considered as an external user from the perspective of the local IT system and can be authorized only after receiving necessary authorization from the central IT system, et cetera. Furthermore, in certain scenarios, if the communication link to access the local IT system faces a downtime, the technical engineer/serviceman is compelled to physically visit the location, inspect and repair the local entity, in order to fix the technical snag. This is challenging as the user authentication becomes difficult and a time consuming process to receive the necessary authorization to access the local IT system.

Owing to the tremendous complexity and the vast extent of the modern day power plants, a huge number of technical snags can probably occur at any of the local entities and/or the local units of the power plant. There can also be a huge number of different technical personnel who may have to access the local IT system from different locations for fixing the different technical snags. This necessitates a huge number of user data sharing, user authentications, et cetera at the local IT system level, and necessitates tremendous data storage spaces, huge amount of data transfers over public networks, huge amount of user management for user authentications, et cetera, which is an inefficient manner of user management, and consumes huge bandwidth for communication. Furthermore, if the communication links are down (for example if an undersea communication link connecting a wind mill local IT system is snapped), then the same should not stall the fixing of the technical snags by the concerned technical personnel.

Owing to the aforementioned drawbacks and problems, an effective and intelligent user management architecture is required for the power plant and the PPCS associated.

GB 2 487 049 A discloses a computer system at a site which determines whether a network connection to a remote authentication source is available. If the connection is available, the system authenticates the user by interaction with the remote source. The system authenticates the user against a user-provided credential if the connection is unavailable or, in a preferred arrangement, in addition to remote authentication. The credential is preferably provided or validated by the remote source less than a predetermined time before authentication, e.g. 24 hours, and access to resources may be based on the credential. Preferably, the credential is a certificate issued by or on behalf of a trusted certification authority and may indicate a user role governing access to resources. The system may hold one or more certificates issued by the authority that relate to permissions for resources at the site. Access to specific resources may be permitted if allowed by both the credential and one or more of the system's certificates. Preferably the site is a power generation facility, e.g. a wind park in which the system is either a SCADA (supervisory, control and data acquisition) server or is comprised within a wind turbine.

WO 2008/086801 A2 relates to a wind farm monitoring and control system, said system comprising - at least one wind farm, - at least one intelligent management server connectable to said at least one wind farm via a data communication network, - at least one wind farm configuration tool related to said intelligent management server for establishment of connection(s) to said at least one wind farm. The monitoring and control is performed so that it is possible to monitor and control several wind farms homogeneously. Hereby, it is possible to monitor and control different wind farms simultaneously with a uniform output and it is moreover possible to compare data from the wind farms.

EP 2037651 A1 relates to method of accessing, by a user or operator, an access-critical device of an industrial process control system. The access-critical embedded devices is accessed by a user or service technician is controlled by way of a mobile memory or access-ticket storage means, i.e. a physical token such as a smartcard or USB stick with appropriate memory for storing user credentials or user identification means such as a password or fingerprint. The user acquires an electronic access ticket with a suitable expiration period from a centralized ticket or access authorization server before travelling to the access-criti cal device, or to a location communicatively connected to the latter. The access ticket contains the access rights of the user with respect to one or several access-critical devices and is likewise stored on the mobile memory means. The access rights are evaluated by the access-critical devices upon authentication of the identity of the user, based on the user credentials, by an authenticating device to which the mobile memory means is coupled. Hereby, local authentication and authorization of users is performed at an embedded device which has no connectivity to external devices. User information is provided by means of cryptographic mechanisms; a central ticket issuing device can issue a cryptographically protected ticket (e.g. at a USB stick), which the user can then apply later for accessing another isolated device.

US 2012/232961 A1 relates to materials handling vehicles such as forklifts that are integrated with enterprise computing systems by providing a transceiver on a vehicle, where the transceiver is configured for wireless data communication across a wireless computing environment. More particularly, integration is implemented by configuring a processor on the materials handling vehicle to: communicate with the transceiver for wireless communication to a corresponding server computer, to communicate with at least one electronics component of the materials handling vehicle across a vehicle network bus and to receive logon information to identify an operator logging onto the materials handling vehicle. Integration also comprises configuring the processor to implement at least one customization function on the materials handling vehicle based upon the received logon information by: wirelessly communicating information between the server computer and the materials handling vehicle via the transceiver and interacting with at least one component of the materials handling vehicle across the materials handling vehicle network bus.

### SUMMARY OF THE INVENTION

An object of the present application is to effectively manage the users associated with a power plant system, and to propose a power plant control system (PPCS) associated.

Another object of the present application is to enhance the security in the power plant system and the PPCS.

A further object of the present application is to increase the simplicity and expedite the user authentication in the power plant system and the PPCS,

Yet another object of the present application is to enhance the central management of the users associated with a power plant system, while still permitting the local management of the users.

Yet another object of the present application is to keep user management up-to-date in the power plant system and the PPCS,

The present application discloses a method according to claim 1 for user management in a power plant control system for a power plant system. Herein the power plant system includes different entities, which may be geographically spread out over long distances, The power plant control system includes a central server and multiple local servers. The communication between the central server and the local servers is enabled for facilitating exchange of data between the same. The central server manages each of the local servers, and a local server manages one or more entities of the power plant system. The central server includes different user roles, and each user role defines one or more tasks to be executed on one or more aforementioned entities.

Herein, one or more user roles are assigned to a user, which enables the user to perform the tasks associated with the user roles on the entities managed by a specific local server. A list containing information regarding the user roles that are assigned to the user is provided to the specific local server. Hereby, the authentication of the user on the specific local server for performing the tasks on the entities managed by the specific local server is facilitated. By providing the list for authentication of the server, the local server may not be required to query the central server when an external user tries to log in to the local server. Furthermore, the authentication performed by the local server can still be secure, even if communication between the central server and the local server faces a temporary downtime. Additionally, by sharing data (list of user roles assigned to the users) that is specific only to that local server, the amount of data exchange for user management is minimized, optimising the process of user management. Furthermore, this leads to minimization of data storage space on a local server that is needed to data related to user management. Information related to the authorized users has to be stored.

The present application also discloses a power plant control system (PPCS) according to claim 10 for achieving the aforementioned user management for the power plant system. Herein, the PPCS includes the aforementioned central server and the multiple local servers.

Furthermore, the present application discloses a Wind Power Generation System (WPGS) according to claim 17 whereon the method for user management is implemented using the aforementioned PPCS.

### BRIEF DESCRIPTION OF THE DRAWINGS

A full and enabling disclosure of the present technique, including the best mode, directed to one of ordinary skill in the art, is set forth in the remainder of the specification, which makes reference to the appended figures in which:
- FIG. 1: depicts a wind power generation system (WPGS) and a wind power Supervisory Control and Data Acquisition (SCADA) system comprising a central server communicatively coupled to a plurality of local servers,
- FIG 2: depicts a pyramidal representation of the different tiers of the WPGS and the users associated,
- FIG 3: depicts the central server comprising a central processor and a central database for managing the users,
- FIG 4: depicts a local server comprising a local processor and a local database for managing and authenticating the users associated therewith,
- FIG 5: depicts the central processor processing user roles, user data and inventory data for generating specific lists to be provided to a specific local server for user management,
- FIG 6: depicts the respective specific lists provided by the central server to the respective local servers,
- FIG 7: depicts the respective updated specific lists provided by the central server to the respective local servers, and
- FIG 8: depicts a flowchart of a method for user management in the power plant and the PPCS associated therewith.

### DETAILED DESCRIPTION OF THE INVENTION

Reference will now be made in detail to various embodiments of the present application, and the one or more examples of which are set forth below. Each example is provided by way of explanation of the application, and not to be construed as a limitation of the application. Various modifications and variations, as may be perceived by a person skilled in the art, and may be made to the present application without departing from the scope or spirit of the application. Features illustrated or described as part of one embodiment, may be used on another embodiment. Thus, it is intended that the present application covers such modifications and variations as come within the scope of the appended claims and their equivalents.

An underlying purpose of the present application is to simplify the user management in a power plant system and also to enhance the security. In accordance with one or more embodiments of the present application, the security of the power plants can be enhanced by effective centralised management of users and user data associated with a Power Plant Control System (PPCS). Herein, only respective user data is shared with respective entity of the PPCS, wherein the user data shared therewith is relevant only to the respective entity of the PPCS therein.

In order to explain the present application in a lucid manner, a power plant system in the form of a Wind Power Generation System (WPGS) and a PPCS in the form of a Wind Power Supervisory Control And Data Acquisition (SCADA) System (hereinafter referred to as "SCADA System") for monitoring and controlling the WPGS are considered. The SCADA System is one of the widely known PPCS, and it is hereby assumed that the present application and the accompanying embodiments, and how the same facilitate to achieve the hereinabove set forth objectives, may be well understood, in order to solve the present problems associated with security and user management in the PPCS, irrespective of the type of PPCS and the type of industry and the industrial framework whereunto the PPCS is deployed. Nevertheless, the present application and the accompanying embodiments may be applied to any of the PPCS known to a person skilled in the art for enhancing the security of the PPCS and to achieve improved user management in the field of PPCS.

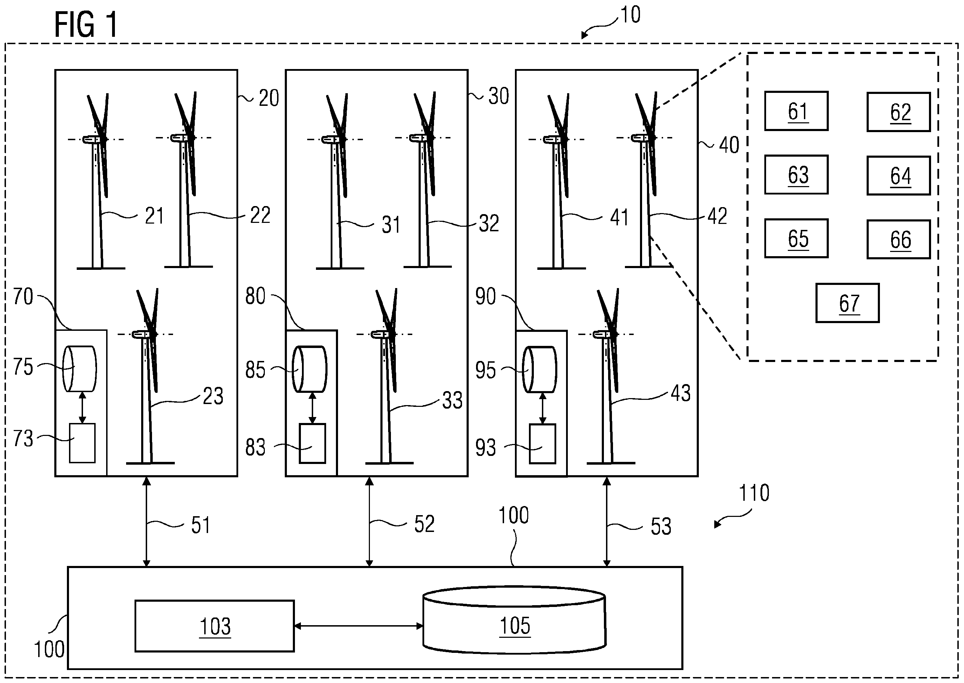

FIG 1 depicts a WPGS 10 comprising a network of a plurality of wind parks 20,30,40, which is a well-known power plant system for power generation. A wind park 20,30,40 may be considered as the aforementioned entity of the power plant system, in the context of the WPGS 10, whereunto relevant data is capable of being communicated. Each of the plurality of wind parks 20,30,40 comprises one or more individual wind mills 21-23,31-33,41-43 for harnessing wind power for generating electric power from a location wherefrom the wind mills 21-23,31-33,41-43 are situated. The electric power generated by the respective wind park 20,30,40 (i.e. the sum of electric powers generated by the individual wind mills 21-23,31-33,41-43) may then be supplied to an electric grid (for e.g., a smart grid), or distributed to industries and/or retail consumers, et cetera. Each of the wind parks 20,30,40 may either be located offshore, onshore, or partly offshore and partly onshore. Furthermore, the wind parks 20,30,40 may be located in one geographical area depending on the wind pattern and the wind intensity in the concerned area, and the aforementioned area may span hundreds of square kilometers of a designated area of land (such as a county/village, or a town/city, et cetera), a designated area in a water body, or a combination. Similarly, the number of wind mills 21-23,31-33,41-43 per wind park 20,30,40 may also vary depending on the aforementioned factors, and additionally based on the designated electric power production capacity of the wind park 20,30,40 (generally represented in hundreds of mega Watts), the individual electric power rating of the wind mills 21-23,31-33,41-43, et cetera. There are different types of individual wind mills 21-23,31-33,41-43, and furthermore, each wind park 20,30,40 may comprise individual wind mills 21-23,31-33,41-43 of the same type or a combination of the different types of wind mills 21-23,31-33,41-43.

Herein, for the purpose of explanation of the present application, three wind parks 20,30,40 of the WPGS 10, and three wind mills 21-23,31-33,41-43 per wind park 20,30,40 are considered, and the same are accordingly depicted in FIG 1. However, the actual number of wind parks 20,30,40 in the WPGS 10 may vary, and similarly, the number of wind mills 21-23,31-33,41-43 comprised per wind park 20,30,40 may also vary. Nevertheless, the teachings of the present application elucidated hereinafter may be applied thereto without loss of generality, in order to achieve the aforesaid objectives.

From the perspective of any of the wind mills 21-23,31-33,41-43 of any of the respective wind parks 20,30,40, each wind mill 21-23,31-33,41-43 may broadly comprise a plurality of units 61-67 (only the significant units are depicted), viz. a blade unit 61, a rotor unit 62, a turbine and a generator unit 63 for converting the wind power into electric power, a converter unit 64, a transformer unit 65, a communication unit 66 for communicating with a wind park controller, a meteorological unit 67 for determining the meteorological conditions of the location wherefrom the wind mill 21-23,31-33,41-43 is situated, a control unit for controlling the orientation of the blades of the wind mill 21-23,31-33,41-43 for varying the angle of attack, et cetera. These units 61-67 and their respective functions are well known in the art of network of wind mills 21-23,31-33,41-43 and wind parks 20,30,40 and are not explained herein for the purpose of brevity.

Similarly, from the perspective of a wind park 20,30,40, a wind park 20,30,40 may broadly comprise a plurality of units 100 (only certain significant units are depicted), viz. a wind park controller (not depicted) for controlling the operations of the individual wind mills 21-23,31-33,41-43, a wind park local server 70,80,90 (hereinafter referred to as "the local server 70,80,90") for collecting and handling different data related to the individual wind mills 21-23,31-33,41-43 of the wind park 20,30,40, a network interface unit (not depicted) for enabling the local server 100 for communicating with another local server 100 of another wind park 20,30,40 or to another wind park controller or to a controller located higher up the hierarchy, a security unit (not depicted) for monitoring the data and network security of the wind park 20,30,40 and the wind mills 21-23,31-33,41-43 associated with the wind park 20,30,40, et cetera.

The local server 70,80,90 comprises a local processor 73,83,93 for processing the received data, and a local database 75,85,95 for storing data related to the respective wind park 20,30,40 and the respective wind mills 21-23,31-33,41-43 associated with the wind park 20,30,40. The local database 75,85,95 and the local processor 73,83,93 are communicatively coupled and may reside inside the local server 70,80,90. These units 70,80,90 and their respective functions are well known in the art of wind parks 20,30,40 and are not explained herein for the purpose of brevity.

Herein, the WPGS 10 comprises a wind power central server 100 (hereinafter referred to as "the central server 100"), and the central server 100 is communicatively coupled to each of the local servers 70,80,90 of the respective wind parks 20,30,40, establishing respective communication links 51,52,53 between the central server 100 and each of the respective local servers 70,80,90. The central server 100 comprises a central database 105 for data storage operations and for storing data related to the WPGS 10, and a central processor 103 for data processing.

Since the central server 100 is communicatively coupled to each of the local servers 70,80,90, the exchange of necessary data and control signals between the central server 100 and the local servers 70,80,90 is enabled and facilitated. The aforementioned communication links 51,52,53 enable the central server 100 to acquire data pertaining to the respective wind parks 20,30,40 and of one or more of the wind mills 21-23,31-33,41-43 comprised in the wind park 20,30,40. The data may comprise process data, wind and meteorological data, sensor data (turbine rotation speed, wind speed, blade orientation, blade condition, et cetera), turbine usage data, network data, data related to the power generated, data related to the electric grid whereto the wind park is connected, et cetera. Each of the communication links 20,30,40 further allows the central server 100 to perform database querying the respective local server 70,80,90, or vice versa, for obtaining relevant data for processing, controlling, user authentication, et cetera. This enables the central server 100 to monitor and control the different units 61-67 (associated with the wind mills 21-23,31-33,41-43) the respective processes associated therewith, and the functioning of the individual wind parks 20,30,40 and/or the individual wind mills 21-23,31-33,41-43 associated with the respective wind park 20,30,40.

Herein, the communicative coupling, which is represented by the respective communication links 51,52,53 between the central server 100 and each one of the local servers 70,80,90, may be wired, wireless, or a combination. Furthermore, the communication may be achieved by Internet, Ethernet, WiMAX, WLL, or any similar techniques and technologies that are appropriate to achieve the aforementioned.

A wind power Supervisory Control And Data Acquisition (SCADA) system 110 (hereinafter referred to as "the SCADA system 110") for the WPGS 10 comprises the central server 100, the plurality of local servers 70,80,90, and the associated instruments (not shown) for data acquisition and transmission, enabling the central server 100 to monitor and control the processes associated therewith, and the functioning of the individual wind parks 20,30,40 and/or the individual wind mills 21-23,31-33,41-43 associated with the respective wind parks 20,30,40. The SCADA system 110 permeates through different hierarchies/levels (wind mill level, wind park level, et cetera) of the WPGS 10 and is because it facilitates in monitoring and controlling the performance of the WPGS 10. In accordance with the established SCADA protocols, the central server 100 issues signals and commands to the local server 70,80,90 for exchanging data and for controlling the operations of the respective wind park 20,30,40 whereunto the local server 70,80,90 is associated. Thus, the SCADA system 110 enables the central server 100 in the collection of various process data, sensor data, user data, security data, meteorological data, condition monitoring data, network data, et cetera. Furthermore, the central server 100 may provide control signals to the local servers 70,80,90 for controlling the one or more individual wind mills 21-23,31-33,41-43 and/or individual wind parks 20,30,40. This may, for example, comprise monitoring the wind direction from the meteorological information obtained from the local server 70,80,90, and accordingly modifying the angle of attack of one or more wind mills 21-23,31-33,41-43 associated with a wind park 20,30,40 depending on the prevailing wind direction, wind intensity, et cetera.

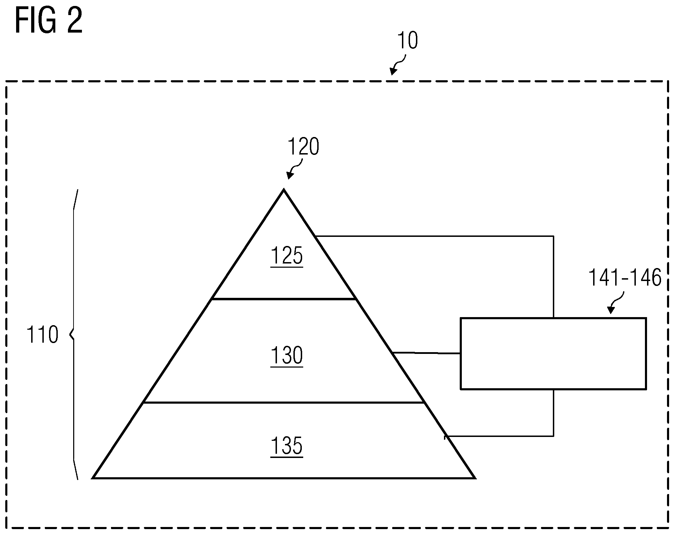

FIG 2 depicts a three-tiered Wind Power Generation System pyramid 120 (WPGS pyramid) of the aforementioned WPGS 10 of FIG 1 in hierarchical and a pyramidal form.

Referring back to FIG 1 along with FIG 2, the bottommost tier 135 in the hierarchy represents the individual wind mills 21-23,31-33,41-43 of the different wind parks 20,30,40, the intermediate tier 130 in the hierarchy represents the wind parks 20,30,40 that comprise the respective wind mills 21-23,31-33,41-43, and the topmost tier 125 in the hierarchy represents a geographical region that comprises the respective wind parks 20,30,40. The geographical region may correspond to a collection of the aforementioned wind parks 20,30,40, and the geographical region may even span an area in the range of thousands of square kilometers, such as a state or a country, et cetera.

The aforementioned central server 100 is construed to be present at the topmost tier 125 that represents the geographical region, wherein the central server 100 is communicatively coupled to the respective local servers 70,80,90 of the wind parks 20,30,40 represented in the intermediate tier 130. Herein, it may be noted that the SCADA system 110 permeates through each of the tiers 125,130,135 of the WPGS pyramid 120, and the SCADA system 110 supervises and controls the aforementioned plurality of units 61-67 of the individual wind mills 21-23,31-33,41-43 and the individual wind parks 20,30,40.

The WPGS 10 and the SCADA system 110 are distributed systems, and the vast extent mandates a plurality of users 141-146 to operate the WPGS 10 and the SCADA system 110 for the proper functioning of the same. To ensure security and proper functioning of the pluralities of the units 61-67 associated with the WPGS 10 and the SCADA system 110, different user roles are identified wherein the roles comprise the tasks to be executed by one or more of the respective users 141-146 associated with the WPGS 10 and the SCADA system 110. The aforementioned users 141-146 may operate at one or more tiers 125,130,135 of the WPGS 10 depending on the aforementioned roles assigned to the respective users 141-146 by the central server 100. The manner in which the central server 100 centrally manages the users 141-146 and their access rights and privileges in the WPGS 10 and the SCADA system 110 for ensuring a smooth operation of the same will be elucidated in detail with respect to the forthcoming figures.

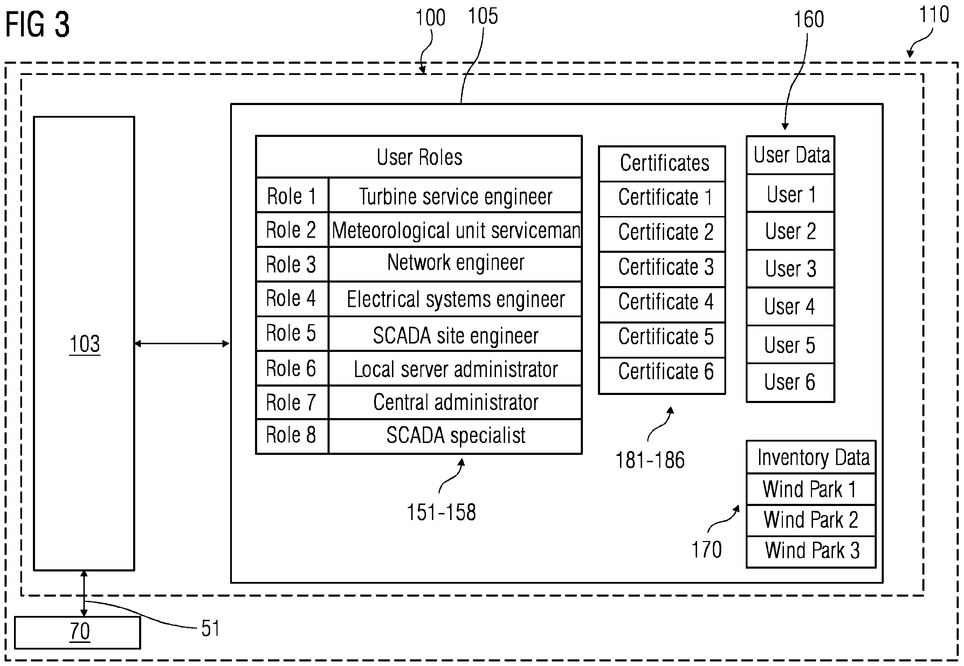

FIG 3 depicts the central server 100 comprising a central database 105 and a central processor 103, wherein the central database 105 is communicatively coupled to the central processor 103. The central database 105 is a data storage unit (any of the well known data storage units, and the like) and primarily comprises data related to different user roles 151-158, data related to the users 160, data related to inventory 170, et cetera. Furthermore, the central database 105 may be a relational database and permit SQL querying of the same by the central processor 103 and/or any of the local processors 73,83,93.

Referring back to the aforementioned FIGURES along with FIG 3, herein, the user data 160 relates to details of the user 141-146, and may comprise a plurality of fields such as user name, user identification number, location specific details of the user, user credentials such as data related to qualifications, skill sets and experience of the user 141-146 (which are relevant in the context of the WPGS 10 and the SCADA system 110), biometric data, et cetera. The actual number of users 141-146 in the WPGS 10 may be large owing to the vast extent of the WPGS 10, for example tens of thousands of users 141-146, and this may result in a huge amount of user data 160. Herein, for the purpose of brevity and for a lucid explanation of the application, user data 160 for the six users (User 1-6) 141-146 are considered and are accordingly depicted in FIG 3.

Herein, inventory can comprise individual wind mills 21-23,31-33,41-43, or entities such as respective wind parks 20,30,40, the aforementioned plurality of units 61-67 of the wind mills 21-23,31-33,41-43, et cetera. The inventory herein can be as big as an entire wind park 20,30,40, including the wind mills 21-23,31-33,41-43 and the plurality of units 61-67 associated therewith, or otherwise the inventory can be as small as one specific unit 61-67 of respective wind mills 21-23,31-33,41-43. The inventory data 170 is a collection of the specific details of the aforementioned inventory, and may further comprise the eligibility criteria for accessing, operating, servicing, or managing the inventory. Herein, for the purpose of brevity and for a lucid explanation of the application, the inventory is only considered at a broad level and is generalized as the three wind parks 20,30,40. However, the teachings of the present application may be applied even if the data related to the inventory comprises a huge collection of even more minute and more specific details of the wind parks 20,30,40 and the wind mills 21-23,31-33,41-43 associated.

Herein, the user roles 151-158 define the specific role and the tasks and activities associated that are to be performed by a user 141-146 in the framework of the WPGS 10 and the SCADA system 110 for the proper functioning of the same. The user roles 151-158 may be specific to one or more of the different tiers 125,130,135 of the WPGS 10, i.e., some user roles 151-158 may be tier-specific wherein the activity of the user 141-146 is restricted to the inventory belonging to that tier only, whereas certain other user roles 151-158 may be specific to more than one tier wherein the user role 151-158 mandates the user 141-146 to operate in different tiers 125,130,135. Furthermore, the user role 151-158 can define the specific inventory that is accessible to the user 141-146 for executing the tasks associated with the user role 151-158. This is entirely dependent on the type of user role 151-158 that exists based on the prevailing needs in the context of the WPGS 10 and the SCADA system 110.

Certain user roles 151-158 associated with the third tier 135 of the WPGS pyramid 120 may comprise turbine service engineer, meteorological unit serviceman, electrical systems engineer, et cetera. Certain roles 151-158 associated with the second tier 130 of the WPGS pyramid 10 may comprise network engineer, SCADA site engineer, local server administrator, et cetera. Certain roles 151-158 associated with the first tier 125 of the WPGS pyramid 120 may comprise central administrator, SCADA specialist, et cetera. A multitude of user roles 151-158 is possible within the framework of the WPGS 10 and the SCADA system 110, and only a few are listed above and accordingly depicted in FIG 3. The actual number of user roles 151-158 in the WPGS 10 and the SCADA system 110 may be large, for example hundreds of user roles 151-158, but herein for the sake of explanation of the application, eight user roles (Role 1-8) 151-158 are considered.

In an aspect of the present application, the user roles 151-158 may be created and managed by a central administrator (not shown) operating at the central server 100 depending on the prevailing needs of the WPGS 10 and the SCADA system 110. Herein, this may comprise the central administrator choosing to create new user roles or deleting certain existing roles. The central administrator may also choose to modify certain existing user roles 151-158, wherein the tasks and activities associated may be modified, or the inventory associated with the existing user roles 151-158 may be modified.

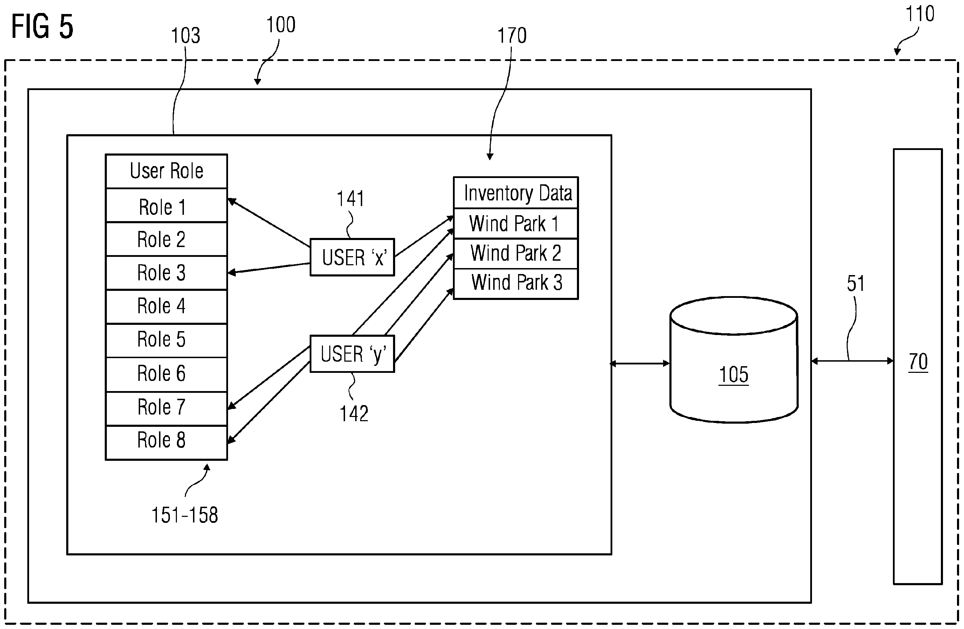

Furthermore, the central database 105 can store certificates 181-186 related to user roles 151-158, wherein a certificate 181-186 defines a role-specific qualification required to be possessed by any user 141-146 for executing a specific user role 151-158, i.e. for performing the tasks associated with the user role 151-158. This is generally useful when a user 141-146 is required to operate, service, and/or repair any of the aforementioned plurality of units 61-67 of the respective wind mills 21-23,31-33,41-43. The manner in which the certificates 181-186 are processed/are useful for data processing and will be elucidated in detail with respect to FIG 5.

Herein, it may be noted that the user data 160, user roles 151-158, inventory data 170, certificates 181-186 may be represented in the form of objects, records, files, and the like, and combinations such that they are capable of being processed by a data processing device, such as a computer.

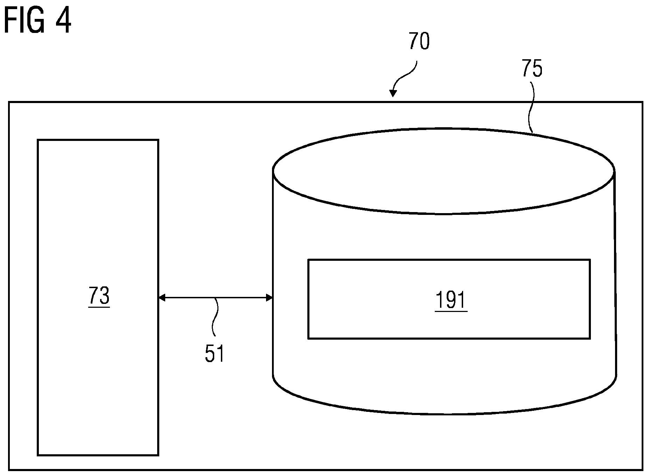

The central processor 103 fetches the necessary data, such as user role 151-158, user data 160, inventory data 170, certificates 181-186, et cetera from the central database 105 for processing the necessary data to obtain processed data. The processed data generally comprises a list of users 141-146, the one or more roles 151-158 that are assigned to the users 141-146, the inventory 170 whereon the user 141-146 is supposed to operate, service, and/or manage, et cetera. The processed data, which herein becomes information specific to a wind park 20,30,40, is then provided to a respective local server 70,80,90, for user authentication for monitoring, data acquisition, servicing, and/or controlling the respective wind park 20,30,40 or one or more wind mills 21-23,31-33,41-43 by one or more of the pertinent users 141-146, et cetera, and the same will be elucidated in detail with respect to FIG 4.

FIG 4 depicts the local server 70 comprising the local database 75 and the local processor 73, wherein the local processor 73 is communicatively coupled to the local database 75. Though FIG 4 depicts only the local server 70, the same is applicable to other local servers 80,90 as well.

Referring back to the aforementioned FIGURES along with FIG 4, the local database 70 is again a data storage unit and stores the processed data provided by the central server 100, which comprises the information specific to the wind park 20 whereunto the local server 70 is associated. Furthermore, the local databases 75,85,95 may any type of persistent storage unit, such as a relational database and permit SQL querying of the same by the central processor 103 and/or any of the local processors 73,83,93. Herein, the local database 75 is queried by the local processor 73 during authentication of a user 141-146 at the wind park 20 or at any of the wind mills 21-23 associated, should a user try to access any of the plurality of the units 61-67 of the wind park 20 or of any of the wind mills 21-23 associated. Furthermore, the local database 75 may also serve as a storage space for the data acquired from the plurality of units 61-67 associated with the respective wind park 20 and the wind mills 21-23 associated. The contents of the local database 75 may also be provided to the central server 100 if the central server 100 queries local server 70 for the same.

Additionally, the local server 70 can comprise an activity logger module, which monitors the users 141-146 who have accessed any of the plurality of units 61-67 associated with the wind mills 21-23 of the wind park 20 whereunto the local server 70 is associated, along with the activities performed by the users 141-146 on that specific plurality of units 61-67 associated with the wind mills 21-23 of the wind park 20. The activity logger module may be a software program functioning in the server for performing the aforementioned, and a resulting activity log file may be stored in the local database 75 or may be provided to the central server 100 upon a request issued by the central sever 100 to the local server 70.

FIG 5 depicts the central processor 103 of the central server 100, and the manner in which the central processor 103 processes information for performing user management.

Referring back to the aforementioned FIGURES along with FIG 5, the central processor 103 fetches the relevant data stored in the central database 105, and provides the processed data to a specific local server 70,80,90 of a specific wind park 20,30,40. The data therewith provided is specific to the one or more users 141-146 associated with the one or more wind mills 21-23,31-33,41-43 of the wind park 20,30,40 and/or the wind park 20,30,40 itself. The data provided by the central server 100 to the local server 70,80,90 is used primarily for authenticating one or more users 141-146 associated with the wind park 20,30,40, wherein the one or more users 141-146 may try to access one or more of the aforementioned plurality of units 61-67 associated with the wind mills 21-23,31-33,41-43 of the respective wind park 20,30,40. Herein, accessing of a unit 61-67 or a wind mill 21-23,31-33,41-43 or a wind park 20,30,40 may be performed by remote log in, for example using a standard protocol such as Remote Authentication Dial In User Service (RADIUS). Furthermore, the access may also be a physical access, for example using a swipe card or biometric verification of the user 141-146, et cetera.

According to an embodiment of the present application, the central processor 103 assigns one or more user roles 151-158 to a user 141. One manner of performing the aforesaid assignment is disclosed processing the user's credentials, and accordingly assigning the one or more user roles 151-158 appropriate to the user 141-146 based on the user's credentials. For example, if user 141 possesses experience in working, servicing and repairing wind turbines and the electrical systems associated with the wind mills 21-23,31-33,41-43 and/or the wind parks 20,30,40, the central server 100 may assign role 1 (i.e. turbine service engineer) and role 4 (i.e. electrical systems engineer) to user 141. Since wind turbines are present in all the wind mills 21-23,31-33,41-43 of the respective wind parks 20,30,40, user 141 may be granted access and authenticated to work on all the inventory, i.e. all the wind parks 20,30,40.

The aforementioned assignment may be further expedited, if the user 141 possesses a certificate testifying the user's qualification. For example, if user 141 possesses a relevant certificate testifying the user's experience in working, servicing and repairing wind turbines and the electrical systems associated with the wind mills 21-23,31-33,41-43 and/or the wind parks 20,30,40, then the central processor 103 can compare the certificate possessed by user 141 with the plurality of certificates 181-186 stored in the central database 105 before assigning one or more user roles 151-158 to the user 141. This increases the fidelity and security of the central server 103 in assigning befitting roles 151-158 and appropriate inventory 170 to a user 141.

Furthermore, after the assignment of the one or more roles 151-158 to a specific user 141, the central processor 103 can also restrict the inventory that is accessible to the user 141. For example, if user 145 possesses relevant qualification, knowledge and experience in the domain of electrical systems, SCADA, and networking, then the central processor 103 can assign the role 3 (i.e. network engineer), role 4 (i.e. electrical systems engineer), role 5 (i.e. SCADA site engineer) and role 6 (local server administrator), and in addition to the aforementioned, the central processor 103 may however decide to restrict the inventory access for user 145 to only wind park 30, because the prevailing need in the WPGS 10 and the SCADA system 110, and the same may mandate user 145 to operate and manage only specific roles 151-158 concerning wind park 30.

In the aforementioned manner, the central processor 103 assigns appropriate and relevant roles 151-158 to the users 141-146, and this aspect is depicted accordingly in FIG 5 with respect to two users viz. user 'x' and user 'y' (wherein 'x' and 'y' can be any numerical values between 1 and 6), wherein user 'x' and user 'y' are assigned appropriate roles 151-158 and the relevant inventory. Subsequently, a list can be generated in the central server 100 and communicated to the respective local server 70,80,90 of the wind park 20,30,40, wherein the generated list is the processed data and is specific to the inventory associated with a wind park 20,30,40. Thus, centralised user management is achieved, which enhances the security in the WPGS 10 and the SCADA system 110 associated.

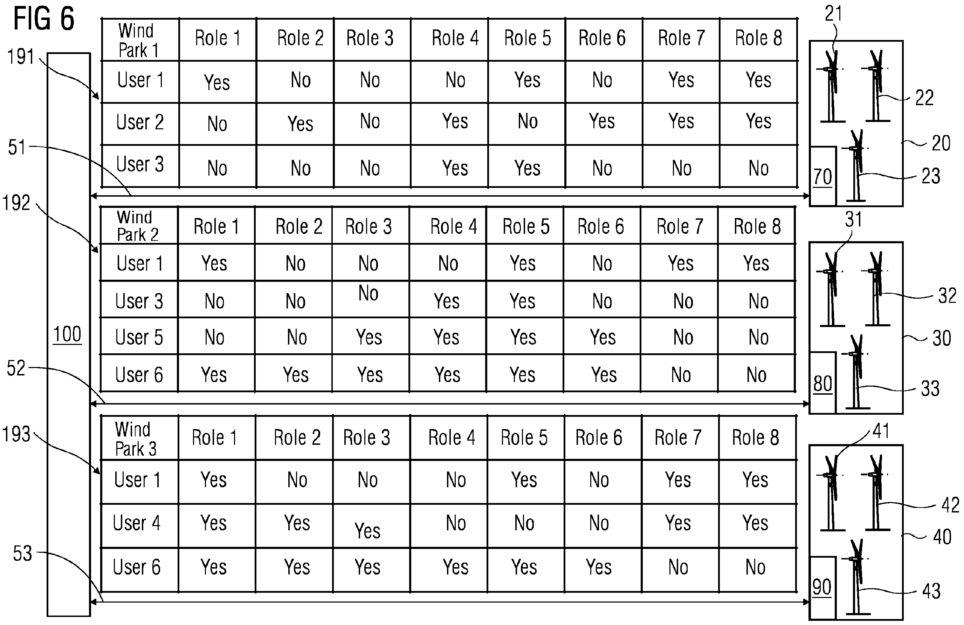

FIG 6 depicts the central server 100 communicating lists 191,192,193 to the respective local servers 70,80,90 of the respective wind parks 20,30,40. Each list 191,192,193 that is communicated to the respective local server 70,80,90 specifically comprises the authorized users 141-146, user roles 151-158 of the users 141-146 who are authorized to operate and/or manage and/or service the one or more units 61-67 of the plurality of units 61-67 associated with the wind mills 21-23,31-33,41-43 of the wind park 20,30,40. It may be observed from FIG 6 that the specific list 191 communicated to the local server 70 of wind park 20 can be different from the lists 192,193 communicated to the respective local servers 80,90 of wind parks 30,40, and the list 191,192,193 communicated thereto focuses on the users 141-146 and the user roles 151-158 to be executed by the users 141-146 specific to the wind parks 30,40.

Since the users 141-146 are six in number, the users 141-146 can also be represented, without loss of generality, as user 1, user 2, ... user 6 respectively, for sake of lucidity. I.e., user 141 (wherein "141" is the reference numeral) can also be represented as 'user 1', user 142 (wherein "142" is the reference numeral) can also be represented as 'user 2', for the sake of lucid explanation of the sections to follow.

Herein, the term "YES" denotes that a user 141-146 is assigned with a role and is authorized to work on a inventory where the role is to be performed. Herein, the term "NO" denotes that a user 141-146 is not assigned with a role and is not authorized to work on an inventory where the role is to be performed.

The local database 73,83,93 of the wind park 20,30,40 receives the list 191,192,193 and stores the same, and the same is referred to when a user 141-146 tries to access any of the plurality of units 61-67 associated with the wind mills 21-23,31-33,41-43 of the wind park 20,30,40 for executing the tasks of any user role 151-158. The local processor 73,83,93 may query the local database 75,85,95 and may authenticate the user 141-146 only if the user 141-146 is authorized to access the same by the central server 100, i.e. firstly if the user 141-146 is present in the respective list 191,192,193 received by the respective local server 70,80,90 from the central server 100, and secondly if the user 141-146 is authorized to perform the specific tasks associated with the specific user role 151-158 for which the authorization is sought.

Herein, once the local server 70,80,90 is provided with the specific list 191,192,193, a user authentication may be performed locally at the local server 70,80,90 itself even if there is a downtime in the respective communication links 51,52,53 existing between the central server 100 and the respective local servers 70,80,90, as the user authentication occurs at a local server 70,80,90. This obviates the querying of the central database 105 for authenticating a user 141-146 locally, as the querying for authentication is performed locally at the local server 70,80,90. This further enhances the security and accessibility of the WPGS 10 and the associated SCADA system 110.

As mentioned in the preceding sections, the user roles 151-158 may change with the passage of time depending on the prevailing needs in the context of the WPGS 10 and the SCADA system 110. Additionally, the respective users' credentials may also change, if the respective users 141-146 acquire further qualifications, experience and skill sets. Furthermore, the users 141-146 may be granted access to additional inventory based on the then existing user roles 151-158 and the then existing users' credentials. The central database 105 gets appropriately updated in accordance with the aforementioned changes to the user roles 151-158, users' credentials, and the access to inventory. The central processor 103 then fetches the relevant data from the updated central database 105 and again assigns one or more user roles 151-158 to the user 141-146 accordingly based on the user's credentials, as explained in the preceding sections with reference to FIG 5.

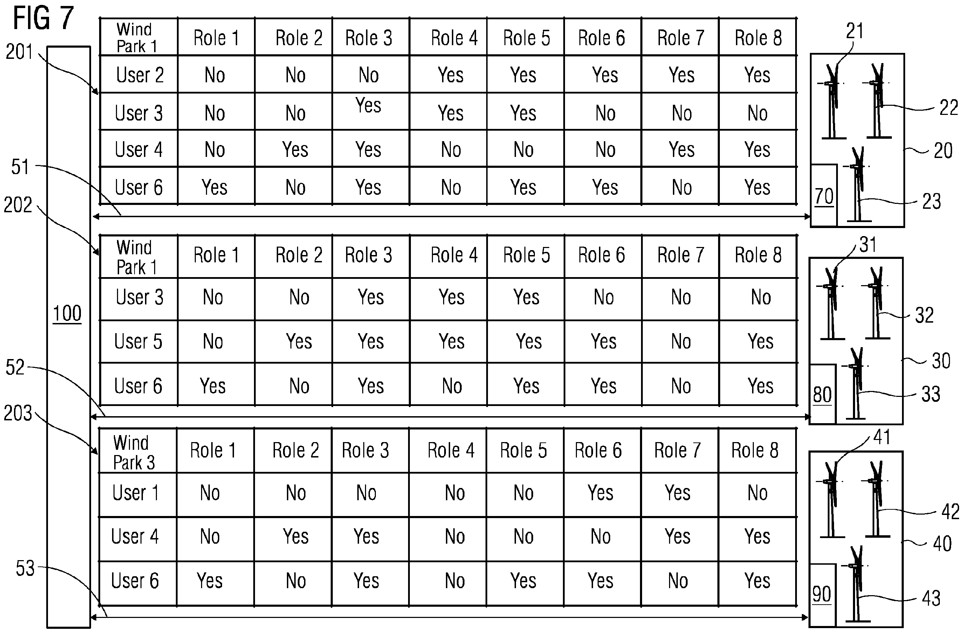

FIG 7 depicts the aforementioned scenario, wherein updated specific lists 201,202,203 are generated by the central processor 103, and the central server 100 accordingly communicates the updated specific lists 201,202,203 to the specific respective local servers 70,80,90 of the respective wind parks 20,30,40 over the established communication links 51,52,53.

Thus, the updates occurring at the central server 100 are duly communicated according to the specific local servers 70,80,90, and therewith the respective local servers 70,80,90, are kept up-to-date and the security of user authentication is maintained intact. Furthermore, if any of the communication links 51,52,53 existing between the central server 100 and the respective local servers 70,80,90 is inactive due to a temporary downtime or a temporary loss of connection, then the updated specific list 201,202,203 will be communicated by the central server 100 to the specific local server 70,80,90 when the communication link 51,52,53 becomes active again.

Referring to any of the aforementioned FIGURES, herein it may also be noted that the central server 100 centrally manages the users 141-146 and the user data 160 associated with each of the local servers 70,80,90, the user roles 151-158 assigned to the users 141-146, and the inventory specific to the users 141-146 associated with a certain wind park 20,30,40. Herewith, only authorized users 141-146, who are granted access to perform tasks specific to the roles 151-158 on an inventory by the central server 100 may be granted access to operate/manage/repair the specific units 61-67 associated with the wind park 20,30,40 and/or the wind mills 21-23,31-33,41-43 of the respective wind parks 20,30,40.

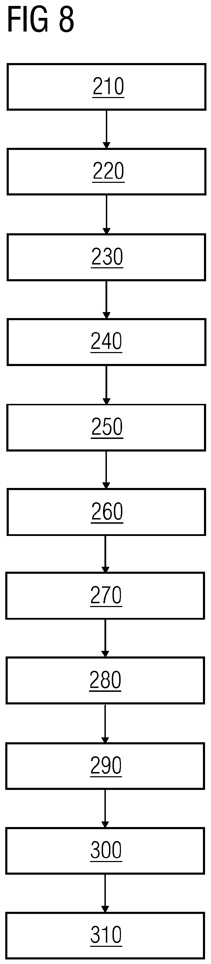

FIG 8 depicts a flowchart of a method for performing the user management on the users associated with the WPGS 10 and the SCADA system 110 associated therewith. Herein the method is summarized in a sequential and step wise manner, whereas the elements required for realising the method and the respective functions in the WPGS 10 and the SCADA system 110 are already explained with reference to FIGS 1 to 7.

In a step 210, both the user data 160 comprising user credentials and the certificates 181-186 stored in the central database 105 are fetched by the central processor 103 and the same are processed. Each certificate 181-186 comprises data regarding the type of qualification, experience and/or skill set required by any user 141-146 for performing the user role 151-158 defined by the certificate 181-186. The user credentials of the user 141-146 comprise the type of qualification, experience and/or skill set already possessed by the user 141-146. Herein, for assigning a user role 151-158 to the user 141-146, the user credentials are compared with the data comprised in the one or more certificates 181-186 relevant to the role 151-158. According to an aspect, if the user 141-146 is an employee of an organisation, one way of accessing user data 160 and user credentials may be from an employee database of the organisation.

In a subsequent step 220, the user 141-146 is assigned with the role 151-158, only if the user credentials substantially match with the data comprised in the respective certificates 181-186. I.e., the user 141-146 is assigned with the user role 151-158 only if the user 141-146 possesses the necessary qualification, experience and/or skill set as defined in the relevant certificate 181-186 for assigning the user role 151-158 as defined in the certificate 181-186 to the user 141-146. Furthermore, the user 141-146 is assigned with access to the inventory as defined in the certificate 181-186 related to the role 151-158. Herewith, the user 141-146 is enabled to perform the tasks specified in the user role 151-158 on the one or more units 61-67 of the respective wind mills 21-23,31-33,41-43 and the wind parks 20,30,40.

Herein, it may be noted that more than one user role 151-158 may be assigned to the user 141-146. For assigning more than one role 151-158 to the user 141-146, steps 210 and 220 are repeated. Herein, the certificates 181-186 relevant to the user role 151-158 are again processed with the user credentials for assigning further user roles 151-158 to the user 141-146, and the respective user roles 151-158 are assigned to the user 141-146 when the user credentials match with the data comprised in the respective certificates 181-186 pertaining to the respective user roles 151-158.

In a step 230, the aforementioned specific lists 191-193 are generated by the central processor 103. The specific lists 191-193 comprise the user roles 151-158 assigned to the user 141-146, and the units 61-67 of the wind mills 21-23,31-33,41-43 and the wind parks 20,30,40 whereon the user 141-146 is authorized to perform respective tasks as defined in the respective user roles 151-158. Herein, he specific lists 191-193 may be in the form of a file, record, or any data format that is capable of being read and processed by a processing unit, for example a computer.

In a step 240, prior to providing the specific lists 191-193 by the central server 100 to the specific local servers 70,80,90, a status of the communication links 51,52,53 between the central server 100 and the respective local servers 70,80,90 is checked. Herewith, disclosed checking it is determined whether the communication link 51,52,53 is active or not, i.e. whether the data transmission between the central server 100 and the local server 70,80,90 is possible or not. This may be achieved by the central server 100 pinging the local server 70,80,90, or querying the local server 70,80,90, et cetera. If the communication link 51,52,53 is active, then in a subsequent step 250, the specific list 91,92,93 is provided from the central server 100 to the specific local server 70,80,90 of the respective wind park 20,30,40 whereon the user 141-146 can perform the tasks defined in the respective user roles 151-158. The specific list 91,92,93 can be provided in a wired manner, wireless manner, or a combination, depending on the type of individual communication links 51,52,53 that exists between the central server 100 and the respective specific local servers 70,80,90. Furthermore, by providing the specific list 91,92,93 to the respective specific local server 70,80,90, the authentication of the user 141-146 is facilitated, in order to access the inventory whereunto the local server 70,80,90 is associated for performing the tasks defined by the user role 151-158.

In a step 260, the specific list 91,92,93 that is provided to the specific local server 70,80,90 is stored in the local database 75,85,95 of the specific local server 70,80,90. Herewith, local log in and authentication of the user 141-146 on the specific local server 70,80,90 becomes possible. The user authentication can now be performed locally, obviating querying of the central server 100 for user verification, et cetera. In a subsequent step 270, the user 141-146 is authenticated by the specific local server 70,80,90, for performing the respective one or more tasks as defined in the respective user roles 141-146. Herewith, the user 141-146 is granted access to the one or more units 61-67 associated with the respective wind mills 21-23,31-33,41-43 and the wind park 20,30,40, whereon the tasks are to be performed by the user 141-146.

According to an aspect of the present application, the SCADA system 110 permits remote log in of the user 141-146 at any of the specific local servers 70,80,90 for accessing the units 61-67 associated with the local server 70,80,90 and the wind parks 20,30,40. The remote log in may be enabled by the aforementioned RADIUS protocol.

In a step 280, the activities of the user 141-146 are monitored post the authentication of the user 141-146 by the specific local server 70,80,90 and when the user 141-146 starts to execute the tasks defined in the user role 151-158 on the respective units 61-67 associated with the windmills 21-23,31-33,41-43 and the wind park 20,30,40. Herewith, activity log files may be generated that captures the nature of activities performed by the user 141-146, the period of the activity, et cetera and the same may be provided to the central server 100. This security measure is beneficial in tracking the activities performed by the user 141-146 during the execution of the tasks, as well as reference data for future.

In a step 290, the user roles 151-158 are updated by the central server 100. Herein, depending on the prevailing needs of the WPGS 10 and the SCADA system 110, three types of changes may be effected on the plurality of user roles 151-158. Firstly, new user roles may be added to the plurality of existing user roles 151-158. Secondly, some of the existing user roles may be deleted from the plurality of existing user roles 151-158. Thirdly, some of the tasks and/or the inventory associated with a user role 151-158 may be modified. The changes that are effected on the plurality of user roles 151-158 results in an updated plurality of roles.

Hereafter, the updated plurality of user roles is used for assigning one or more user roles 151-158 to a user 141-146 for executing the respective tasks defined in the user roles 151-158 on the units 61-67 of the wind mills 21-23,31-33,41-43 and the wind park 20,30,40. To achieve this, in a subsequent step 300, an updated list 201-203 is generated by the central server 100. In a further step 310, the updated list 201-203 is provided by the central server 100 to the specific local server 70,80,90. Furthermore, the updated list 201-203 is used for authenticating the user 141-146 trying to access any of the units 61-67 associated with the specific local server 70,80,90, the wind mills 21-23,31-33,41-43, and the wind parks 20,30,40.

The present application has been explained using a two-level hierarchy, wherein the central server 100 manages the plurality of local servers 70,80,90, it may be herewith noted that the teachings of the present application may be used for a case wherein one or more intermediate servers may be added between the central server and the plurality of the local servers, such that the central server 100, the intermediate servers and the plurality of local servers 70,80,90 are in a serial relation. Therewith, the addition of the intermediate servers results in a three-level hierarchy, wherein a first cluster of the plurality of local servers 70,80,90 may be managed by a first intermediate server, and a second cluster of the plurality of local servers 70,80,90 may be managed by a second intermediate server, and so on. Herein, the intermediate server directly manages its respective cluster of local servers 70,80,90, and the central server 100 directly manages the intermediate servers. I.e., the central server 100, the intermediate servers and the clusters of local servers 70,80,90 are in cascade.

Although the present technique has been described with reference to specific embodiments, this description is not meant to be construed in a limiting sense. Various modifications of the disclosed embodiments, as well as alternate embodiments of the technique, will become apparent to persons skilled in the art upon reference to the description of the technique. It is contemplated that such modifications can be made without departing from the embodiments of the present technique as defined.

## Claims

1. A method for a user management in a power plant control system for a power plant system comprising a plurality of entities, the power plant control system comprising a central server and a plurality of local servers wherein the central server is configured to manage the plurality of local servers and the local servers are configured to manage the entities, the method comprising the steps of:
processing (210), by a central processor (103) of the central server (100), a credential of a user (141-146) and comparing the credential with a certificate (181-186) stored in the central server (100), wherein the credential comprises data related to a qualification of the user (141-146) and defines the qualification of the user (141-146) to the specific user role (151-158).
assigning (220) a specific user role (151-158) from a plurality of user roles (151-158) to the user (141-146) having the certificate (181-186) matching with the credential by the central server (100) of the power plant control system, wherein the assigned user role (151-158) defines a task to be performed by the user (141- 146);
generating (230) a list (191-193) comprising information about the user (141-146) and the assigned user role (151-158) by the central server (100), and
providing (260) the list (191-193) by the central server (100) to a local server (70, 80, 90) for performing the task defined in the assigned user role (151-158) on an entity managed by the local server (70, 80, 90).

2. The method according to claim 1, wherein the credential further comprises data related to a skill set and experience of the user (141-146) associated to the specific user role (151-158).

3. The method according to claim 1, further comprising:
determining (240) a communication link (51-53) between the central server (100) and the local server (70, 80, 90) prior to providing the list (191-193) to the local server (70, 80, 90);
checking a status of the communication link (51-53), and
providing the list (191-193) to the local server (70, 80, 90) only if the status of the communication link (51-53) is active.

4. The method according to claim 1, wherein the list (191-193) is provided by the central server (100) to the local server (70, 80, 90) wirelessly.

5. The method according to claim 1, further comprising:
generating (300) an updated list (201-203) if a different user role (151-158) is assigned to the user (141-146), wherein the updated list comprises information about the user (141-146) and the different user role (151-158), and
providing (310) the updated list (201-203) to the local server (70, 80, 90) for authenticating the user (141-146) for performing the task defined in the different user role (151-158) on the entities (61-67) managed by the local server (70, 80, 90).

6. The method according to claim 5, further comprising updating the user roles comprising adding a new role to the user roles (151-158), deleting a role from the user roles (151-158), or modifying a task defined in the user roles (151-158).

7. The method according to claim 1, further comprising storing (260) the list (191-193) at the local server (70, 80, 90).

8. The method according to claim 1, further comprising authenticating (270) the user (141-146) by the local server (100) for performing the assigned task.

9. The method according to claim 1, further comprising monitoring (280) an activity of the user (141-146) by the local server (70, 80, 90) if the user executes the assigned task.

10. A power plant control system for a power plant system comprising a plurality of entities, comprising:
a plurality of local servers (70, 80, 90); and
a central server (100) communicatively coupled to the local servers (70, 80, 90),
wherein the central server (100) is configured to:
manage the local servers (70, 80, 90) and the entities (61-67), process (210) a credential of a user and comparing the credential with a certificate stored in the central server, wherein the credential comprises data related to a qualification of the user and defines the qualification of the user to the specific user role.
assign the specific user role from a plurality of user roles to the user having the certificate matching with the credential for enabling the user to perform a task defined in the assigned user role by a local server on an entity managed by the local server,
generate (230) a list comprising information about the user and the assigned user role, and provide a list comprising the assigned user role to the local server.

11. The power plant control system according to claim 10, wherein the central server (100) is wirelessly communicatively coupled to the local servers (70, 80, 90).

12. The power plant control system according to claim 10, wherein the local server (100) is configured to monitor (280) an activity of the user (141-146).

13. The power plant control system according to claim 10, wherein the local server (70, 80, 90) is configured to enable remote login by the user for executing the task.

14. The power plant control system according to claim 13, wherein the remote login is enabled by Remote Authentication Dial In User Service protocol.

15. The power plant control system according to claim 10, wherein the central server (100) comprises a central database (105) for storing the user roles (151-158).

16. The power plant control system according to claim 10, wherein the local server (70, 80, 90) comprises a local database (105) for storing the list (191-193) provided to the local server (70, 80, 90).

17. A power plant system, comprising:
a plurality of entities (61-67); and
a power plant control system according to claim 10,
wherein the power plant system is a wind power generation system, and
wherein each of the entities (61-67) is a wind park (20, 30, 40) comprising a wind mill (21-23, 31-33, 41-43).

## Patentansprüche

1. Verfahren zur Benutzerverwaltung in einem Kraftwerk-Steuerungssystem in einer Kraftwerkanlage mit einer Vielzahl von Einheiten, wobei das Kraftwerk-Steuerungssystem einen zentralen Server und eine Vielzahl von lokalen Servern umfasst, der zentrale Server dafür konfiguriert ist, die Vielzahl von lokalen Servern zu verwalten, und die lokalen Server dafür konfiguriert sind, die Einheiten zu verwalten, und das Verfahren folgende Schritte umfasst:
Verarbeiten (210), durch einen zentralen Prozessor (103) des zentralen Servers (100), eines Berechtigungsnachweises eines Benutzers (141-146) und Vergleichen des Berechtigungsnachweises mit einem im zentralen Server (100) gespeicherten Zertifikat (181-186), wobei der Berechtigungsnachweis Daten umfasst, die sich auf die Qualifikation des Benutzers (141-146) beziehen und die Qualifikation des Benutzers (141-146) für die spezifische Benutzerrolle (151-158) definieren;
Zuweisen (220) einer spezifischen Benutzerrolle (151-158) aus einer Vielzahl von Benutzerrollen (151-158) zu dem Benutzer (141-146) mit dem Zertifikat (181-186), das mit dem Berechtigungsnachweis übereinstimmt, durch den zentralen Server (100) des Kraftwerk-Steuerungssystem, wobei die zugewiesene Benutzerrolle (151-158) eine durch den Benutzer (141-146) auszuführende Aufgabe definiert;
Erstellen (230) einer Liste (191-193) mit Informationen über den Benutzer (141-146) und der durch den zentralen Server (100) zugewiesenen Benutzerrolle (151-158), und
Bereitstellen (260) der Liste (191-193) durch den zentralen Server (100) für einen lokalen Server (70, 80, 90), um die in der zugewiesenen Benutzerrolle (151-158) definierte Aufgabe an einer durch den lokalen Server (70, 80, 90) verwalteten Einheit auszuführen.

2. Verfahren nach Anspruch 1, wobei der Berechtigungsnachweis weiterhin Daten umfasst, die sich auf eine Fertigkeit und Erfahrung des zu der spezifischen Benutzerrolle (151-158) gehörigen Benutzers (141-146) beziehen.

3. Verfahren nach Anspruch 1, weiterhin umfassend:
Bestimmen (240) einer Kommunikationsverbindung (51-53) zwischen dem zentralen Server (100) und dem lokalen Server (70, 80, 90), bevor die Liste (191-193) für den lokalen Server (70, 80, 90) bereitgestellt wird;
Überprüfen eines Status der Kommunikationsverbindung (51-53), und
Bereitstellen der Liste (191-193) für den lokalen Server (70, 80, 90) nur dann, wenn der Status der Kommunikationsverbindung (51-53) aktiv ist.

4. Verfahren nach Anspruch 1, wobei der zentrale Server (100) die Liste (191-193) für den lokalen Server (70, 80, 90) drahtlos bereitstellt.

5. Verfahren nach Anspruch 1, weiterhin umfassend:
Erstellen (300) einer aktualisierten Liste (201-203), wenn dem Benutzer (141-146) eine andere Benutzerrolle (151-158) zugewiesen wird, wobei die aktualisierte Liste Informationen über den Benutzer (141-146) und die andere Benutzerrolle (151-158) umfasst, und
Bereitstellen (310) der aktualisierten Liste (201-203) für den lokalen Server (70, 80, 90), um den Benutzer (141-146) zur Ausführung der in der anderen Benutzerrolle (151-158) definierten Aufgabe auf den durch den lokalen Server (70, 80, 90) verwalteten Einheiten (61-67) zu authentifizieren.

6. Verfahren nach Anspruch 5, weiterhin umfassend das Aktualisieren der Benutzerrollen, umfassend das Hinzufügen einer neuen Rolle zu den Benutzerrollen (151-158), das Löschen einer Rolle aus den Benutzerrollen (151-158) oder das Modifizieren einer in den Benutzerrollen (151-158) definierten Aufgabe.

7. Verfahren nach Anspruch 1, weiterhin umfassend das Speichern (260) der Liste (191-193) auf dem lokalen Server (70, 80, 90).

8. Verfahren nach Anspruch 1, weiterhin umfassend das Authentifizieren (270) des Benutzers (141-146) durch den lokalen Server (100), um die zugewiesene Aufgabe auszuführen.

9. Verfahren nach Anspruch 1, weiterhin umfassend das Überwachen (280) einer Tätigkeit des Benutzers (141-146) durch den lokalen Server (70, 80, 90), wenn der Benutzer die zugewiesene Aufgabe ausführt.

10. Kraftwerk-Steuerungssystem für eine Kraftwerkanlage mit einer Vielzahl von Einheiten, umfassend:
eine Vielzahl von lokalen Servern (70, 80, 90); und
einen zentralen Server (100), der kommunikativ mit den lokalen Servern (70, 80, 90) gekoppelt ist, wobei der zentrale Server (100) dafür konfiguriert ist,
die lokalen Server (70, 80, 90) und die Einheiten (61-67) zu verwalten, einen Berechtigungsnachweis eines Benutzers zu verarbeiten (210) und den Berechtigungsnachweis mit einem im zentralen Server gespeicherten Zertifikat zu vergleichen, wobei der Berechtigungsnachweis Daten umfasst, die sich auf die Qualifikation des Benutzers beziehen und die Qualifikation des Benutzers für eine bestimmte Benutzerrolle definieren;
die spezifische Benutzerrolle aus einer Vielzahl von Benutzerrollen dem Benutzer mit dem Zertifikat zuzuweisen, das mit dem Berechtigungsnachweis übereinstimmt, um es dem Benutzer zu ermöglichen, eine Aufgabe, die in der durch einen lokalen Server zugewiesene Benutzerrolle definiert ist, an einer durch den lokalen Server verwalteten Einheit auszuführen;
eine Liste mit Informationen über den Benutzer und die zugewiesene Benutzerrolle zu erstellen (230) und dem lokalen Server eine Liste mit der zugewiesenen Benutzerrolle bereitzustellen.

11. Kraftwerk-Steuerungssystem nach Anspruch 10, wobei der zentrale Server (100) kommunikativ drahtlos mit den lokalen Servern (70, 80, 90) gekoppelt ist.

12. Kraftwerk-Steuerungssystem nach Anspruch 10, wobei der lokale Server (100) dafür konfiguriert ist, eine Tätigkeit des Benutzers (141-146) zu überwachen (280).

13. Kraftwerk-Steuerungssystem nach Anspruch 10, wobei der lokale Server (70, 80, 90) dafür konfiguriert ist, eine Fernanmeldung durch den Benutzer zum Ausführen der Aufgabe zu ermöglichen.

14. Kraftwerk-Steuerungssystem nach Anspruch 13, wobei die Fernanmeldung durch das Protokoll eines Authentifizierungsdienstes für sich einwählende Benutzer (Remote Authentication Dial In User Service) ermöglicht wird.

15. Kraftwerk-Steuerungssystem nach Anspruch 10, wobei der zentrale Server (100) eine zentrale Datenbank (105) zum Speichern der Benutzerrollen (151-158) umfasst.

16. Kraftwerk-Steuerungssystem nach Anspruch 10, wobei der lokale Server (70, 80, 90) eine lokale Datenbank (105) umfasst, um die von dem lokalen Server (70, 80, 90) bereitgestellte Liste zu speichern.

17. Kraftwerkanlage, umfassend:
eine Vielzahl von Einheiten (61-67), und
ein Kraftwerk-Steuerungssystem nach Anspruch 10,
wobei die Kraftwerkanlage eine Windenergieerzeugungsanlage ist, und
wobei jede der Einheiten (61-67) ein Windpark (20, 30, 40) mit einer Windkraftanlage (21-23, 31-33, 41-43) ist.

## Revendications

1. Un procédé destiné à une gestion d'utilisateur dans un système de commande de centrale électrique pour un système de centrale électrique comprenant une pluralité d'entités, le système de commande de centrale électrique comprenant un serveur central et une pluralité de serveurs locaux, le serveur central étant configuré de façon à gérer la pluralité de serveurs locaux et les serveurs locaux étant configurés de façon à gérer les entités, le procédé comprenant les étapes suivantes :
le traitement (210), par un processeur central (103) du serveur central (100), d'un justificatif d'identité d'un utilisateur (141-146) et la comparaison du justificatif d'identité à un certificat (181-186) conservé en mémoire dans le serveur central (100), le justificatif d'identité comprenant des données relatives à une qualification de l'utilisateur (141-146) et définissant la qualification de l'utilisateur (141-146) vis-à-vis du rôle d'utilisateur spécifique (151-158),
l'affectation (220) d'un rôle d'utilisateur spécifique (151-158) d'une pluralité de rôles d'utilisateur (151-158) à l'utilisateur (141-146) possédant le certificat (181-186) correspondant au justificatif d'identité par le serveur central (100) du système de commande de centrale électrique, le rôle d'utilisateur affecté (151-158) définissant une tâche à exécuter par l'utilisateur (141-146),
la génération (230) d'une liste (191-193) comprenant des informations concernant l'utilisateur (141-146) et le rôle d'utilisateur affecté (151-158) par le serveur central (100), et
la fourniture (260) de la liste (191-193) par le serveur central (100) à un serveur local (70, 80, 90) pour l'exécution de la tâche définie dans le rôle d'utilisateur affecté (151-158) sur une entité gérée par le serveur local (70, 80, 90).

2. Le procédé selon la revendication 1, dans lequel le justificatif d'identité comprend en outre des données relatives à un ensemble de compétences et une expérience de l'utilisateur (141-146) associées au rôle d'utilisateur spécifique (151-158).

3. Le procédé selon la revendication 1, comprenant en outre :
la détermination (240) d'une liaison de communication (51-53) entre le serveur central (100) et le serveur local (70, 80, 90) avant la fourniture de la liste (191-193) au serveur local (70, 80, 90),
la vérification d'un état de la liaison de communication (51-53), et
la fourniture de la liste (191-193) au serveur local (70, 80, 90) uniquement si l'état de la liaison de communication (51-53) est actif.

4. Le procédé selon la revendication 1, dans lequel la liste (191-193) est fournie par le serveur central (100) au serveur local (70, 80, 90) de manière non filaire.

5. Le procédé selon la revendication 1, comprenant en outre :
la génération (300) d'une liste actualisée (201-203) si un rôle d'utilisateur différent (151-158) est affecté à l'utilisateur (141-146), la liste actualisée comprenant des informations concernant l'utilisateur (141-146) et le rôle d'utilisateur différent (151-158), et
la fourniture (310) de la liste actualisée (201-203) au serveur local (70, 80, 90) à des fins d'authentification de l'utilisateur (141-146) pour l'exécution de la tâche définie dans le rôle d'utilisateur différent (151-158) sur les entités (61-67) gérées par le serveur local (70, 80, 90).

6. Le procédé selon la revendication 5, comprenant en outre l'actualisation des rôles d'utilisateur comprenant l'ajout d'un nouveau rôle aux rôles d'utilisateur (151-158), la suppression d'un rôle des rôles d'utilisateur (151-158) ou la modification d'une tâche définie dans les rôles d'utilisateur (151-158).

7. Le procédé selon la revendication 1, comprenant en outre la conservation en mémoire (260) de la liste (191-193) au niveau du serveur local (70, 80, 90).

8. Le procédé selon la revendication 1, comprenant en outre l'authentification (270) de l'utilisateur (141-146) par le serveur local (100) pour l'exécution de la tâche affectée.

9. Le procédé selon la revendication 1, comprenant en outre la surveillance (280) d'une activité de l'utilisateur (141-146) par le serveur local (70, 80, 90) si l'utilisateur exécute la tâche affectée.

10. Un système de commande de centrale électrique destiné à un système de centrale électrique comprenant une pluralité d'entités, comprenant :
une pluralité de serveurs locaux (70, 80, 90), et
un serveur central (100) couplé en communication aux serveurs locaux (70, 80, 90),
le serveur central (100) étant configuré de façon à :
gérer les serveurs locaux (70, 80, 90) et les entités (61-67), traiter (210) un justificatif d'identité d'un utilisateur et comparer le justificatif d'identité à un certificat conservé en mémoire dans le serveur central, le justificatif d'identité comprenant des données relatives à une qualification de l'utilisateur et définissant la qualification de l'utilisateur vis-à-vis du rôle d'utilisateur spécifique,
affecter le rôle d'utilisateur spécifique d'une pluralité de rôles d'utilisateur à l'utilisateur possédant le certificat correspondant au justificatif d'identité de façon à permettre à l'utilisateur d'exécuter une tâche définie dans le rôle d'utilisateur affecté par un serveur local sur une entité gérée par le serveur local,
générer (230) une liste comprenant des informations concernant l'utilisateur et le rôle d'utilisateur affecté et fournir une liste comprenant le rôle d'utilisateur affecté au serveur local.

11. Le système de commande de centrale électrique selon la revendication 10, dans lequel le serveur central (100) est couplé en communication de manière non filaire aux serveurs locaux (70, 80, 90).

12. Le système de commande de centrale électrique selon la revendication 10, dans lequel le serveur local (100) est configuré de façon à surveiller (280) une activité de l'utilisateur (141-146).

13. Le système de commande de centrale électrique selon la revendication 10, dans lequel le serveur local (70, 80, 90) est configuré de façon à permettre une connexion à distance par l'utilisateur de façon à exécuter la tâche.

14. Le système de commande de centrale électrique selon la revendication 13, dans lequel la connexion à distance est activée par le protocole de service d'utilisateur d'appel d'authentification à distance.

15. Le système de commande de centrale électrique selon la revendication 10, dans lequel le serveur central (100) comprend une base de données centrale (105) destinée à la conservation en mémoire des rôles d'utilisateur (151-158).

16. Le système de commande de centrale électrique selon la revendication 10, dans lequel le serveur local (70, 80, 90) comprend une base de données locale (105) destinée à la conservation en mémoire de la liste (191-193) fournie au serveur local (70, 80, 90).

17. Un système de centrale électrique, comprenant :
une pluralité d'entités (61-67), et
un système de commande de centrale électrique selon la revendication 10,
dans lequel le système de centrale électrique est un système de génération d'énergie éolienne, et
dans lequel chacune des entités (61-67) est un parc d'éoliennes (20, 30, 40) comprenant une éolienne (21-23, 31-33, 41-43).
